# EUROPEAN PATENT SPECIFICATION

(11) **EP 2 586 289 B1**
(45) Date of publication and mention of the grant of the patent: **24.08.2016**
(21) Application number: 12189457.0
(22) Date of filing: 22.10.2012
(51) Int. Cl.: A01D 44/00, A01G 33/00

(54) **Method and system for cultivating aquatic plants**
Verfahren und System zur Kultivierung von Wasserpflanzen
Procédé et système de culture de plantes aquatiques

(30) Priority: 25.10.2011 NL 2007648
(43) Date of publication of application: 01.05.2013
(73) Proprietor: Canter Cremers, Henri Carel Johan, 7071 VE Ulft (NL)
(72) Inventor: Canter Cremers, Henri Carel Johan, 7071 VE Ulft (NL)
(74) Representative: Nederlandsch Octrooibureau

(56) References cited:
- EP-A2- 0 900 518
- WO-A1-2010/123943
- US-A- 3 768 200
- US-A- 5 197 263
- US-A1- 2008 318 304
- US-A1- 2009 193 776

## Description

### TECHNICAL FIELD

The invention relates to a method of cultivating aquatic plants, and more particularly to a method of improving water quality and treating effluent. Furthermore, the invention relates to a cultivator system for cultivating aquatic plants and simultaneously treating waste water.

### BACKGROUND

There has been an increasing interest in the use of aquatic plants as a food source or as water purification agent. Aquatic surface plants such as duckweed grow at or near the surface of bodies of water, tend to have a rather low weight density, a high growth rate, and significant protein content. Such plants are known to be suitable as livestock nutrition or as protein source for livestock feed. The cultivation of aquatic surface plants is not restricted to specific types of soil, and can occur in barren lands or in constructed wetlands. During growth, the water surface plants take in a significant portion of the supplied manure nutrients, thereby purifying the water.

Various methods of cultivating and harvesting aquatic plants are known. In particular, in certain developing countries duckweed may be raked from canals or ditches and fed to livestock. Attempts have been made to improve on such operations using pumping systems to pump duckweed from canals for collection. Unfortunately, such pumping systems cause damage to the plant structure whereby much of the value of the plant as a crop is lost and the water again becomes contaminated. Further attempts to provide alternative harvesting arrangements have run into complications relating to the effective collection of the duckweed while also avoiding drifting due to wind. Other water treatment processes are known that use aquatic plants but such processes are neither intended nor suitable for harvesting or such plants. Such methods are also often unsuitable for small scale application at, for example, cattle farms. A device is proposed in WO 2010/123943 that uses a raceway for culturing and harvesting floating aquatic species. The device uses a paddlewheel to propel both the water and the harwest around the raceway.

### SUMMARY

It would be desirable to provide a method and a system for cultivating aquatic plants, which improves on existing processes and which may be easily implemented at relatively low cost.

Therefore, according to an aspect, there is provided a method of cultivating aquatic plants at the surface of a body of water according to claim 1, the method comprising: - cultivating the aquatic plants in a basin containing the body of water; - supplying nutrient rich water to the body of water at a first location; - extracting purged water from the body of water at a second location distant from the first location; - inducing movement of an aquatic plant portion toward a collection region, and - removing the aquatic plant portion from the collection region;

The nutrient rich water may be an effluent or a prepared mixture of unfermented and/or fermented manure with water. By regulating the growth of the aquatic plants in the manner according to the method (i.e. by controlling nutrient and water supply, water extraction, and plant removal), the quality of the cultivated plants and resulting livestock feed can be warranted. During growth, the water plants take in a significant portion of the nutrients from the water, thereby acting as a bio filter for purifying the water. Purged water is defined herein as water having a lower nutrient concentration as compared to the concentration in the nutrient rich water supplied at the first location. This may where necessary be further defined as water having mass concentrations of less than 2 mg/l Ammonium (NH4) and less than 0,5 mg/l Phosphor (P). This nutrient concentration reduction is the result of the nutrient uptake by the aquatic plants from the water that flows from the water supply location to the water extraction location. A desired water purification level may be achieved by variation of the dwell time in the basin. After extracting purged water at the second location, it may be subsequently further treated or may already be suitable for returning to water courses or streams. As an alternative to using manure enriched water, the nutrient rich water may be groundwater directly pumped up from the soil and supplied to the basin. After purification through nutrient uptake by the aquatic plants, the obtained purged water may be discharged back into the soil. The recycle method for groundwater purification obtained in this way is particularly useful in countries where over fertilization has brought groundwater nitrate (NO3) concentrations to significant levels (e.g. up to 50 mg/l). The aquatic plants in the basin may take up significant amounts of nitrate during growth, resulting in typically achievable purged water nitrate concentrations of less than 1 mg/l. In any case, the cultivation of aquatic plants according to the proposed method presents an effective method for simultaneous effluent processing and livestock feed production.

According to an embodiment of the method, the aquatic plants are aquatic surface plants, preferably of a duckweed species.

Aquatic surface plants i.e. floating non-rooted plants are preferred, due to the achievable high growth rates, the easy growth count monitoring by visual inspection, and relatively easy surface harvesting techniques required for removal of the plants. Duckweed has been found to be particularly suitable for the described purposes, as they are native plants to most of the world, thrive well in many environments, have the ability of taking up nutrients over a wide range of mutually varying concentrations from an aquatic environment, and may obtain a high growth rate and considerable protein content.

According to a further embodiment, the method comprises balancing the cultivation and removal of aquatic plants in the body of water, thereby retaining an average surface mass density of the aquatic plants in a range of 0.5 - 1.5 kg m⁻²

A relatively high concentration (i.e. surface mass density) of plants implies that a significant number of plants are present that can contribute to the plant growth. Nevertheless, if the concentrations get too large, the plants will tend to overlap and block each other from sunlight. This will reduce plant growth. An optimal plant growth can be achieved by balancing the growth and removal of aquatic plants, which requires controlled and regular removal of the plants from the water surface. For duckweed, an average surface mass density in a range of 0.5 - 1,5 kg m⁻² will result in an optimal plant growth rate of up to 50% per day under appropriate nutritional, water temperature, and sunlight conditions.

A portion of the aquatic plants should be regularly removed from the body of water, so as to ensure that the cultivation of the aquatic plants proceeds at optimal surface mass density and corresponding growth rate. Controlled surface plant motion for the purpose of removal can be efficiently implemented by means of a sweeping unit that sweeps across the water surface between the collection region and a distal location in the water basin.

By moving the plants co-directionally with the water flow from the first location corresponding with nutrient water supply to the second location corresponding with purged water extraction, the plants can be collected and removed from the cleanest possible region of the water basin. This may for example be implemented by situating the distal sweeping location near the first location, and the collection region near the second location. As a result, the required cleaning of the collected plants prior to use as livestock feed is minimized. The induced plant movement also continuously removes excess plants from water regions in the basin having a high nutrient concentration and where growth is highest, enabling rapid further plant growth in these regions.

According to a further embodiment, the nutrient rich water comprises fermented manure, in particular, fermented cow manure and/or fermented pig manure, whereby the cow manure and/or pig manure is diluted with water to obtain mass densities of up to 40 mg/l for Nitrogen, and up to 3 mg/l for Phosphor

It has been found that water diluted (fermented) cow and/or pig manure constitutes an excellent source of nutrition for the aquatic plants, rendering the plants very suitable as a biological manure decomposition agent. Beforehand, the fermented or unfermented manure may be separated, e.g. by means of a press auger, to form a solid fraction (approximately 28% dry substance) and a liquid fraction (approximately 6% dry substance). The liquid fraction is preferably used for aquatic plant cultivation. The given mass densities for nitrogen and phosphor correspond to water dilution of undiluted fermented cow manure and/or pig manure in a ratio of 1 part of cow manure to 80 - 150 parts of water, and a ratio of 1 part of pig manure to 160 - 220 parts of water. These mass densities and dilution factors have been found to optimize aquatic plant growth rates, particularly for duckweed. The duckweed species Lemna minor as well as Spirodela polyrhiza, Lemna minuta, Lemna gibba or Lemna arhiza are very well suited to effluent treatment and harvesting as stock feed, because of its high absorption capacity for phosphor and nitrogen. Furthermore, the greenhouse gasses methane and nitrous oxide are not formed when manure is processed in aquatic plant cultivation, contrary to manure being spread over a farm land as fertilizer. With cultivation of duckweed, the emission of greenhouse gasses may be reduced by approximately 30 tons of CO2 equivalent per hectare per year. Consequently, the manure is environmentally-friendly processed and converted to livestock feed. The cultivation of aquatic plants according to the proposed method yields an effective process for simultaneous livestock manure surplus reduction and livestock feed production. The simplicity and relatively small scale and low costs at which this embodiment of the method can be employed render the proposed method particularly suitable for local implementation at stock farms, for example in combination with an already present manure fermentation plant. For duckweed, which has an effective cultivation period of approximately 100 days under natural conditions, a consumption of approximately 500 cubic meters manure per hectare per year may be achieved. By local manure processing and livestock cultivation, transport costs of livestock feed and manure surplus, as well as the emission of manure generated greenhouse gasses can be cost-efficiently reduced.

According to a further embodiment, the method comprises transporting a portion of the purged water extracted at the second location to the first location, and diluting undiluted manure with the portion of purged water, to form the nutrient rich water.

By reusing the purged water resulting from cultivation of the aquatic plants, water consumption required for fermented manure dilution is reduced.

According to a further embodiment, the method comprises heating the body of water by supplying thermal energy from residual heat produced by a manure fermentation installation.

For duckweed, which has an effective cultivation period of approximately 100 days under natural conditions, a yield of approximately 25 tons dried plants per hectare per year may be achieved (under natural conditions). Optimal growth rates for the aquatic plants may require water temperatures different from the ambient temperature. Thermal energy may be supplied to the body of water from various sources, like known electrical heating elements or other thermal sources, possibly transferred to the water body by means of heat exchanger elements. For example, the residual thermal energy generated by a nearby manure fermentation installation may be utilized for keeping the body of water with the aquatic plants at a temperature corresponding to the optimal plant growth rate. The total plant yield in the effective cultivation period can thus be extended by using residual heat.

According to a further embodiment, the method comprises retaining an average temperature in the body of water in a range of 20 - 30°C..

Sustaining the average temperature in the body of water may be facilitated by providing a water temperature controller and/or by accommodating the basin in a polytunnel or a greenhouse. Such additions will help to extend the growing period of the plants. The given temperature range and value have been experimentally confirmed to optimize the aquatic plant growth rate.

According to another embodiment, removing the aquatic plant portion from the collection region comprises at least one of cleaning, drying, and pelleting of the aquatic plant portion.

Cleaning of the removed and collected plants enables the plants to be immediately used as fresh livestock feed. By drying, the storage life of the aquatic plants is extended and its weight is significantly reduced, making transport and handling easier. Dried duckweed for example still presents an excellent protein source for livestock feed.

According to yet another embodiment of the method, removing the aquatic plant portion comprises using a non pressure-based transport system. In this context, "non pressure-based" is intended to refer to a plant discharge mechanism that does not expose the plants to pressure differentials as occur with pumping. Pumped systems used in the past tend to cause damage to the plant cells leading to loss of cell content, which in turn reduced the quality and storage life of the harvested plants. By avoiding using a pressure based plant removal system, e.g. a pumping or suction device, but instead using a non-pressure based plant transport system, e.g. a conveyor belt, the forces exerted on the aquatic plants during removal and the resulting damage to plant cells are minimized. Consequently, the nutritional cell content and the storage life of the harvested plants are preserved.

Furthermore, according to another aspect and in accordance with the effects and advantages described above, there is provided a cultivator system for cultivating aquatic surface plants at the surface of a body of water according to claim 10, the cultivator system comprising: - a basin containing the body of water with aquatic plants; - an effluent supply device, for supplying nutrient rich effluent to the body of water at a first location; - a water extraction device, for extracting purged water from the body of water at a second location distant from the first location; - a plant sweeping unit, for shifting an aquatic plant portion toward a collection region; and - a plant discharge mechanism for removing the aquatic plant portion from the collection region.

The cultivator system may have two or more basins arranged in fluid connection at or near the respective collection regions and with respect to the water surfaces. For example, a plurality of elongated basins may be arranged parallel along the longer sides, and connected by channels in the collection regions. In this way, the aquatic plant portions shifted toward the respective collection regions of the individual basins can be further moved through the surface channels toward the collection regions of one or both of the outer basins, and subsequently removed from the cultivator system by means of only a single or a couple of plant discharge mechanisms.

According to an embodiment, the plant discharge mechanism comprises a water pervious conveyor belt for transporting the aquatic plant portion away from the collection region.

The conveyor belt may be stationary, with a lower end extending into the basin below the surface of the body of water and its upper portion supporting on the bank. It may also be mobile whereby a single conveyor belt system may be moved to different locations for use in a number of basins. The cultivator system may additionally comprise a sprinkler device at or near the water pervious conveyor belt, for cleaning the aquatic plant portion transported by the water pervious conveyor belt. In this way, the aquatic plant portion may be rinsed clean, before it is dried, pelleted, stored, or processed further.

The cultivator system may also be provided with a water spraying system for inducing movement of the plants onto the conveyor or plant discharge mechanism. The use of gentle water jets or sprays has been found very effective in steering the harvested plants within the basin, in particular in order to guide them onto a conveyor and simultaneously rinse them. Alternatively or supplementary to the water spraying system, an air spraying system may be provided for inducing the plant movement. The air spray may be directed at the plant portion relatively near to the conveyor belt. Such spraying systems may be provided in addition to or form part of the plant sweeping unit.

According to another embodiment of the cultivator system, the effluent supply device may comprise a manure fermentation system.

Waste flows of a manure fermentation system may be exploited for cultivating the aquatic plants. Firstly, the manure fermentation system provides fermented manure that may serve as a nutritional source for the aquatic plants. In connection to this, the effluent supply device may be configured for diluting fermented manure from the manure fermentation system with water, so as to produce the nutrient rich water for supply to the basin. Secondly, the residual thermal energy generated by the manure fermentation installation (e.g. from cooling-water or flue gas) may be utilized for keeping the body of water with the aquatic plants at a temperature corresponding to the optimal plant growth rate, or for drying of the harvested surface plants. Furthermore, the carbon dioxide from fermentation biogas or flue gas may be exploited for supplying to and stimulating growth of particular aquatic plants. Thus, providing a cultivator system in combination with a manure fermentation system greatly enhances the environmental durability of the latter.

According to a further embodiment, the cultivator system may comprise a water circulation device for transporting a portion of the purged water extracted at the second location to the first location, and diluting fermented manure with the portion of purged water, to form the nutrient rich water.

According to an important aspect of the invention, the plant sweeping unit is preferably formed as a buoyant member comprising collector arms that are hingably interconnected, wherein the collector arms are configured to open and catch the aquatic surface plant portion when the sweeping unit is moved in a transport direction, and to close and let the aquatic surface plant portion slide by when the sweeping unit is moved opposite to the transport direction.

As a result of the hinge connection between the collector arms, the collector arms will rotatably diverge parallel to the water surface when the sweeping unit moves in the transport direction, thereby sweeping the aquatic surface plants toward the collection region. Furthermore, the collector arms will rotatably converge when the sweeping unit moves opposite to the transport direction, thereby reducing any entrainment of plants in this direction. Alternatively, the buoyant member may also be provided with only a single arm having the described hinging functionality. The skilled person will be well aware of various other similar sweeping arrangements that can be employed to achieve a similar result.

The cultivator system may comprise a single plant sweeping unit, which may be mounted to be dragged by a cable across the basin to collect the plants. Alternatively, multiple sweeping units may be provided, working in series or parallel.

The cultivator system may also comprise retainers arranged to prevent drifting of the plants from the first location towards the second location or vice-versa due to wind. This may be especially important for outdoor basins. The retainers may comprise valve like structures allowing controlled movement of the plants in a first direction but not in a second direction. The retainers may in particular comprise hinged floating members or booms and may form part of the sweeping unit.

In a preferred embodiment, the cultivator system comprises a controller for controlling operation of some or all of the operations of the effluent supply device, the water extraction device, the plant sweeping unit and the plant discharge mechanism. Such a controller may be programmable and/or remotely operable, whereby operation of the system may be monitored at a distance. The controller may also provide additional control, e.g. a water temperature controller for controlling the average temperature in the body of water.

In one embodiment, the controller may comprise intermittent control to operate the sweeping unit in response to a certain degree of plant growth and/or density. This may be determined by appropriate sensors or image recognition techniques. Alternatively, control may be time based with an appropriate duty cycle depending e.g. on climatic conditions. The controller may be adapted to operate the plant discharge mechanism in response to a certain density of plants present in the collection area. Alternatively, the operation of the plant discharge mechanism may be slaved to the plant sweeping unit such that operation of the plant sweeping unit automatically causes operation of the plant discharge mechanism.

### BRIEF DESCRIPTION OF THE DRAWINGS

Embodiments will now be described, by way of example only, with reference to the accompanying schematic drawings in which corresponding reference symbols indicate corresponding parts, and in which:
FIG. 1 schematically shows a perspective view of a cultivator system according to an embodiment;
FIG. 2 presents a top view of a buoyant member according to an embodiment;

The figures are meant for illustrative purposes only, and do not serve as restriction of the scope or the protection as laid down by the claims.

### DETAILED DESCRIPTION

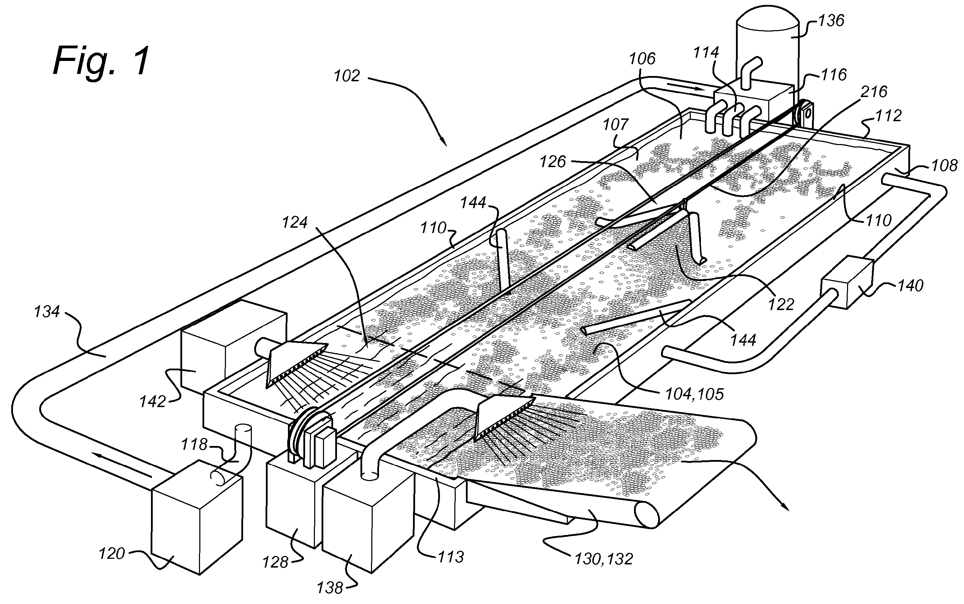

FIG. 1 shows a cultivator system 102 for cultivating aquatic plants 104 in a body of water 106. The cultivator system 102 shown may be used for growing various species of duckweed 105, among which Lemna minor, Lemna minuta, Spirodela polyrhyza, Lemna gibba and Wolffia arrhiza. The shown cultivator system 102 has an elongate rectangular basin 108, with a depth in a range of 30 - 100 cm, e.g. approximately 40 cm, and containing the water 106 with the duckweed 105 floating on the water surface 107. An effluent supply device 116 is provided for supplying nutrient rich water 114 to the body of water 106 at a first location 112. Here, the effluent supply device 116 comprises a time-controlled pump for supplying diluted fermented manure to the water 106 at an average rate corresponding to the estimated total nutritional uptake of the duckweed 105 in the basin 108. A water extraction device 120 is located at a second location 113, shown at a different and distal end of the water basin 108. The water extraction device 120 is configured for extracting purged water 118 from the water body 106.

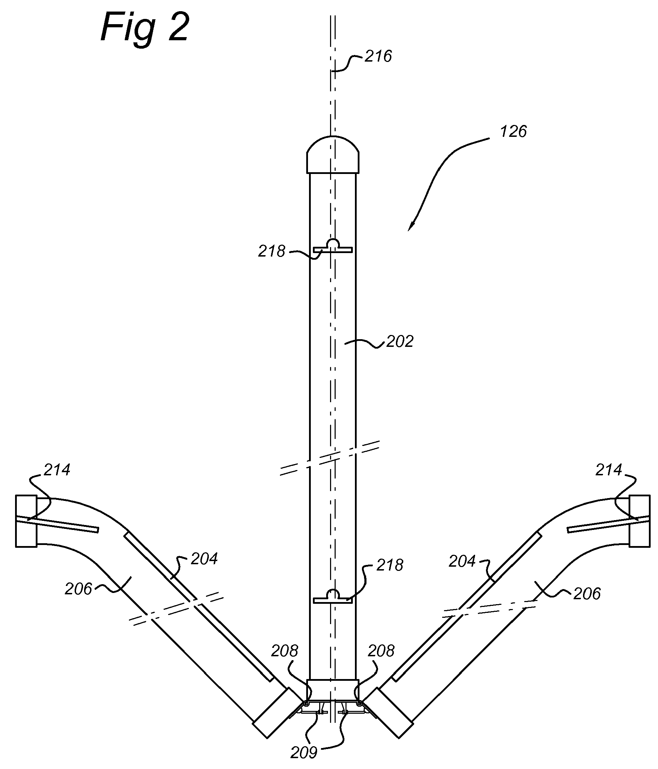

A plant sweeping unit 126 is provided for repeatedly shifting portions of the duckweed 122 toward a collection region 124 of the basin. The sweeping unit 126 can be moved between the collection region 124, which is shown near the second location 113, and a distant location, which is shown near the first location 112. The sweeping unit 126 is hauled across the water surface 107 by cabling 216, which spans the basin 108 above the water surface 107, and is tightened and driven by pulleys and a driving mechanism 128. The plant sweeping unit 126 comprises intermittent control as part of the driving mechanism 128, to operate the sweeping unit 126 in response to a certain degree of plant growth and/or density. The sweeping unit 126 is further explained with reference to FIG.2.

The cultivator system 102 shown in FIG.1 further comprises a manure fermentation system 136, in which fermentation of manure (e.g. of animal origin) is accelerated. The manure fermentation system 136 is schematically shown connected to the effluent supply device 116 by a fermented manure transport conduit for transporting fermented manure from the fermentation system 136 to the effluent supply device 116.

The cultivator system 102 also comprises a water circulation device 134 for transporting a portion of the purged water 118 that is extracted at the second location 113 toward the first location 112. The water circulation device 134 is shown here as connected to and forming an integral part of both the purged water extraction device 120 and the effluent supply device 116. A conduit for transporting the purged water 118 interconnects these devices 116, 120. The effluent supply device 116 mixes and dilutes the fermented manure with the portion of purged water 118, and possibly with additional water from another water source, in order to form the nutrient rich water 114 that is supplied to the water 106 in the basin 108.

The cultivator system 102 comprises a water temperature controller 140 for controlling the average temperature of the water 106. The temperature controller 140 is provided with known temperature sensors and heating elements for monitoring and regulating the water temperature, so as to heat the water 106 under specified conditions, e.g. when a deviation from a reference temperature occurs. The temperature controller 140 may be configured to supply heat to the body of water 106 originating from residual thermal energy generated by the manure fermentation system 136. The residual thermal energy is transferred to the body of water 106 by means of thermal transport channels and heat exchanger elements (not shown).

A conveyor belt 132 is provided at the collection region 124 of the basin 108, and configured for removing the aquatic plant portion 122 from the collection region 124 of the basin 108. The water pervious conveyor belt 132 is provided with a sprinkler device 138 for cleaning the duckweed portion 122 that is transported on the top side of the conveyor belt 132 and away from the basin 108 for further processing. The conveyor belt 132 is water pervious, so as to let the water from the basin 108 and the cleaning water jets leak out and flow back into the basin 108. A spray device 142 is located near the second location 113 of the basin 108, and configured for generating one or more water jets in a direction grazing the water 106 and sideways toward the conveyor belt 132, with the purpose of moving the duckweed portion 122 in the collection region 124 toward the transporting top surface of the conveyor belt 132.

The basin is located outdoors in the open air, and the duckweed may therefore be exposed to wind action, which will tend to concentrate the duckweed in localized regions of the basin. A quantity related to this concept is "fetch", which is a linear measure of space that the wind may blow over to create waves. This fetch and resulting concentration of the duckweed by the wind is prevented by providing retainers or leaders 144 in the basin 108. The retainers or leaders 144 shown are formed by hollow tubes made of PVC and floating on the water surface 107. The leaders 144 may be arranged in hingeable pairs that can abut to form V-shapes, which are configured to open in their joining region and to act as surface valves. Furthermore, the surface distribution of the aquatic plants 104 may be intermittently evened-out by moving the sweeping unit 126 across the water surface 107.

The cultivator system 102 shown in FIG.1 enables execution of a method of cultivating aquatic plants 104 like duckweed 105 at the surface 107 of the body of water 106. The aquatic plants 104 are cultivated in the basin 108 containing the water 106, and fertilized by supplying nutrient rich water 114 to the body of water 106 at the first location 112. The purged (nutrient reduced) water 118 is extracted from the body of water 106 at the second location 113 which is distant from the first location 112. Portions of the aquatic plants 122 are moved toward and removed from the collection region 124 of the basin 108. Inducing movement of the aquatic plant portions 122 toward the collection region 124 involves operation of the driving mechanism 128 in a first direction to move the sweeping unit 126 across the water surface 107 towards the collection region 124, with aquatic plant portion 122 movement substantially co-directional with the flow of the water 106 directed from the supply at the first location 112 to the extraction at the second location 113. Once the sweeping unit 126 reaches the collection region 124, operation of the driving mechanism 128 is stopped and then reversed causing the sweeping unit 126 to move in the opposite direction from the collection region 124 towards the first location 112.

For aquatic surface plants, the cultivation and removal of the aquatic plants 104 is preferably balanced in order to retain an optimal average surface mass density. For duckweed 105, the optimal surface mass density is in a range of 0.5 - 1,5 kg m⁻².

As shown in FIG.1, at least a portion of the nutrient rich water 114 may be produced at the effluent supply device 116 by diluting fermented cow manure and/or fermented pig manure with water, in order to obtain desired nutritional mass densities. The fermented manure may be provided by the manure fermentation system 136, and recycled purged water 118 extracted by the purged water extraction device 120 and supplied by the water circulation device 134 may be used in diluting the manure.

As shown in FIG.1, the method comprises removal of the duckweed 105 by the conveyor belt 132, which is a non-pressure based discharge mechanism 130 that leaves the duckweed cell structure intact. Here, removal of the aquatic plant portions 122 involves cleaning by water jets from the sprinkler device 138. Plant removal may also involve simultaneous or subsequent drying and/or pelleting of the harvest.

FIG.2 illustrates an embodiment of the plant sweeping unit 126 arranged for transporting an aquatic surface plant portion 122 across the surface 107 of the water 106 in the basin 108. The shown plant sweeping unit 126 enables transportation of the aquatic surface plant portion 122 in a direction A toward a collection region 110 of the elongated basin 108 with the aquatic surface plants 104. As shown, the sweeping unit 126 is formed as a buoyant member 202 having a central elongate body along the transport direction A, and comprising at least two collector arms 206 that are hingably connected on opposite sides of the elongate body. The elongate body and the collector arms 206 are formed by closed-off, sealed, hollow plastic tubes made of PVC. Hinge connections 208 connect each collector arm 206 to the central body, and are provided with adjustment mechanisms 209 for adjusting the maximum angle of the arm deflection. In FIG.2 and for each arm 206, a stainless steel bolt is provided that is rotatably accommodated in a screw hole of a plate that is fixed to the central body, wherein the bolt is configured to touch an abutment area fixed to one collector arm 206, and for confining the arm deflection to a set maximum angle.

The collector arms 206 have shove areas 204 that will be exposed to the duckweed 105 when the sweeping unit 126 moves in the transport direction A. Thus, the collector arms 206 will open (i.e. rotatably diverge parallel to the water surface 107) and catch the aquatic surface plant portion 122 when swept in the transport direction A. The collector arms 206 will close (i.e. rotatably converge) when the sweeping unit 126 moves opposite to the transport direction A, thereby reducing any entrainment of plants 122 while moving in this direction, so to let the plant portion 122 slide by. Keels 214 are fixed to distal ends of the collector arms 206 and project downward into the water 106. These keels 214 present flow resistances for creating the opening and closing motion of the collector arms 206 when moved in or opposite to the transport direction A. The sweeping unit 126 may be hauled across the water surface 107 by a cable 216, which is attached to the buoyant member 202 by cable connection points 218. The skilled person will be well aware of various other similar sweeping arrangements that can be employed to achieve a similar result.

The descriptions above are intended to be illustrative, not limiting. It will be apparent to the person skilled in the art that alternative and equivalent embodiments of the invention can be conceived and reduced to practice, without departing from the scope of the claims set out below.

### LIST OF FIGURE ELEMENTS

- 102: cultivator system
- 104: aquatic surface plant
- 105: duckweed
- 106: body of water
- 107: water surface
- 108: basin
- 110: long side
- 112: first location
- 113: second location
- 114: nutrient rich water
- 116: effluent supply device
- 118: purged water
- 120: purged water extraction device
- 122: surface plant portion
- 124: collection region
- 126: sweeping unit
- 128: driving mechanism
- 130: discharge mechanism
- 132: conveyor belt
- 134: water circulation device
- 136: manure fermentation system
- 138: sprinkler device
- 140: water temperature controller
- 142: spray device
- 144: leader
- 202: buoyant member
- 202: float
- 204: shove area
- 206: collector arm
- 208: hinge
- 209: adjusting mechanism
- 210: first flow resistance
- 212: second flow resistance
- 214: keel
- 216: driving cable
- 218: cable connection point
- A: transport direction

## Claims

1. Method of cultivating aquatic plants (104) at the surface (107) of a body of water (106), the method comprising:
- cultivating the aquatic plants (104) in a basin (108) containing the body of water (106);
- supplying nutrient rich water (114) to the body of water (106) at a first location (112);
- extracting purged water (118) from the body of water (106) at a second location (113) distant from the first location (112);
- inducing movement of an aquatic plant portion (122) toward a collection region (124) near the second location (113); and
- removing the aquatic plant portion (122) from the collection region (124), **characterized in that** the movement is induced by moving a sweeping unit (126) across the surface (107) between the collection region (124) and a third location (127) near the first location (112).

2. Method according to claim 1, whereby the aquatic plants (104) are aquatic surface plants, preferably of a duckweed species.

3. Method according to claim 2, comprising:
- balancing the cultivation and removal of aquatic plants (104) in the body of water (106), thereby retaining an average surface mass density of the aquatic plants (104) in a range of 0.5 - 1,5 kg m⁻².

4. Method according to any one of the preceding claims, whereby the nutrient rich water (114) comprises fermented cow manure and/or fermented pig manure, whereby the cow manure and/or pig manure is diluted with water to obtain mass densities of up to approximately 40 mg/l for Nitrogen, and up to approximately 3 mg/l for Phosphor.

5. Method according to claim 4, comprising:
- transporting a portion of the purged water (118) extracted at the second location (113) to the first location (112), and
- diluting undiluted manure with the portion of purged water (118), to form the nutrient rich water (114).

6. Method according to any one of the previous claims, comprising:
- heating the body of water (106) by supplying thermal energy from residual heat produced by a manure fermentation installation (136).

7. Method according to any one of the previous claims, comprising:
- retaining an average temperature in the body of water (106) in a range of 20 - 30°C.

8. Method according to any one of the previous claims, wherein removing the aquatic plant portion (122) from the collection region (124) further comprises at least one of cleaning, drying, and pelleting of the aquatic plant portion (122)

9. Method according to any one of the previous claims, further comprising intermittently controlling operation of the sweeping unit in response to a certain degree of plant growth and/or plant surface density.

10. Cultivator system (102) for cultivating aquatic plants (104) in a body of water (106), the cultivator system (102) comprising:
- a basin (108) containing the body of water (106) with aquatic plants (104);
- an effluent supply device (116), for supplying nutrient rich effluent (114) to the body of water (106) at a first location (112);
- a water extraction device (120), for extracting purged water (118) from the body of water (106) at a second location (113) distant from the first location (112);
- a plant sweeping unit (126), for sweeping across the surface of the water to shift an aquatic plant portion (122) toward a collection region (124); and
- a plant discharge mechanism (130) for removing the aquatic plant portion (122) from the collection region (124),
**characterized in that** the sweeping unit (126) can extend or move between the collection region (124) and a third location near the first location (112), and **in that** the collection region (124) is near the second location (113).

11. Cultivator system (102) according to claim 10, wherein the plant discharge mechanism comprises a water pervious conveyor belt (132), for transporting the aquatic plant portion (122) away from the collection region (124), preferably including a sprinkler device (138) for cleaning the aquatic plant portion (122) at the water pervious conveyor belt (132).

12. Cultivator system (102) according to any one of claims 10 or 11, wherein the sweeping unit (126) is formed as a buoyant member (202) comprising at least one collector arm (206) that is hingably connected, wherein the at least one collector arm (206) is configured to open and catch the aquatic surface plant portion (122) when the sweeping unit (126) is moved in the transport direction (A), and to close and let the aquatic surface plant portion (122) slide by when the sweeping unit (126) is moved opposite to the transport direction (A).

## Patentansprüche

1. Verfahren zum Kultivieren von Wasserpflanzen (104) an der Oberfläche (107) eines Wasserkörpers (106), wobei das Verfahren folgendes umfasst:
- Kultivieren der Wasserpflanzen (104) in einem Becken (108), welches den Wasserkörper (106) enthält;
- Zuführen von nährstoffreichem Wasser (114) zu dem Wasserkörper (106) an einer ersten Stelle (112);
- Extrahieren von gereinigtem Wasser (118) aus dem Wasserkörper (106) an einer zweiten Stelle (113), die von der ersten Stelle (112) entfernt ist;
- Induzieren einer Bewegung eines Teils der Wasserpflanzen (122) in Richtung eines Sammelbereichs (124) in der Nähe der zweiten Stelle (113); und
- Entfernen des Teils der Wasserpflanzen (122) aus dem Sammelbereich (124), **dadurch gekennzeichnet, dass** die Bewegung induziert wird, indem eine Streicheinheit (126) über die Oberfläche (107) bewegt wird
zwischen dem Sammelbereich (124) und einer dritten Stelle (127) in der Nähe der ersten Stelle (112).

2. Verfahren nach Anspruch 1, wobei es sich bei den Wasserpflanzen (104) um Wasseroberflächenpflanzen handelt, vorzugsweise einer Wasserlinsenart.

3. Verfahren nach Anspruch 2, umfassend:
- Halten eines Gleichgewichts zwischen der Kultivierung und Entfernung von Wasserpflanzen (104) in dem Wasserkörper (106), wodurch eine durchschnittliche Oberflächenmassendichte der Wasserpflanzen (104) in einem Bereich von 0,5 bis 1,5 kg m⁻² gehalten wird.

4. Verfahren nach einem der vorhergehenden Ansprüche, wobei das nährstoffreiche Wasser (114) fermentierten Kuhdung und/oder fermentierten Schweinedung umfasst, wobei der Kuhdung und/oder der Schweinedung mit Wasser verdünnt ist/sind, um Massendichten von bis zu ungefähr 40 mg/l in Bezug auf Stickstoff und bis zu ungefähr 3 mg/l in Bezug auf Phosphor zu erhalten.

5. Verfahren nach Anspruch 4, umfassend:
- Transportieren eines Teils des gereinigten Wassers (118), das an der zweiten Stelle (113) extrahiert wird, zu der ersten Stelle (112), und
- Verdünnen von nicht verdünntem Dung mit dem Teil des gereinigten Wassers (118), um das nährstoffreiche Wasser (114) zu bilden.

6. Verfahren nach einem der vorhergehenden Ansprüche, umfassend:
- Erhitzen des Wasserkörpers (106) durch Zuführen von thermischer Energie aus Restwärme, die von einer Dungfermentationsanlage (136) produziert wird.

7. Verfahren nach einem der vorhergehenden Ansprüche, umfassend:
- Aufrechterhalten einer durchschnittlichen Temperatur in dem Wasserkörper (106) in einem Bereich von 20 bis 30 °C.

8. Verfahren nach einem der vorhergehenden Ansprüche, wobei das Entfernen des Teils der Wasserpflanzen (122) aus dem Sammelbereich (124) ferner mindestens Reinigen, Trocknen oder Pelletieren des Teils der Wasserpflanzen (122) umfasst.

9. Verfahren nach einem der vorhergehenden Ansprüche, ferner umfassend das intermittierende Kontrollieren des Betriebs der Streicheinheit als Reaktion auf Pflanzenwachstum und/oder Pflanzenoberflächendichte eines gewissen Grades.

10. Kultivatorsystem (102) zum Kultivieren von Wasserpflanzen (104) in einem Wasserkörper (106), wobei das Kultivatorsystem (102) Folgendes umfasst:
- ein Becken (108), welches den Wasserkörper (106) mit Wasserpflanzen (104) enthält;
- eine Ausflusszufuhrvorrichtung (116) zum Zuführen von nährstoffreichem Ausfluss (114) zu dem Wasserkörper (106) an einer ersten Stelle (112);
- eine Wasserextraktionsvorrichtung (120) zum Extrahieren von gereinigtem Wasser (118) aus dem Wasserkörper (106) an einer zweiten Stelle (113), die von der ersten Stelle (112) entfernt ist;
eine Pflanzenstreicheinheit (126) zum Streichen über die Wasseroberfläche, um einen Teil der Wasserpflanzen (122) in Richtung eines Sammelbereichs (124) zu verlagern; und
- einen Pflanzenabgabemechanismus (130) zum Entfernen des Teils der Wasserpflanzen (122) aus dem Sammelbereich (124),
**dadurch gekennzeichnet, dass** die Streicheinheit (126) sich bis in den Sammelbereich (124) und eine dritte Stelle in der Nähe der ersten Stelle (112) erstrecken bzw. sich zwischen dem Sammelbereich (124) und einer dritten Stelle in der Nähe der ersten Stelle (112) bewegen kann, und dass sich der Sammelbereich (124) in der Nähe der zweiten Stelle (113) befindet.

11. Kultivatorsystem (102) nach Anspruch 10, wobei der Pflanzenabgabemechanismus (130) ein wasserdurchlässiges Transportband (132) zum Transportieren des Teils der Wasserpflanzen (122) weg von dem Sammelbereich (124) umfasst, das vorzugsweise eine Sprinkler-Vorrichtung (138) zum Reinigen des Teils der Wasserpflanzen (122) an dem wasserdurchlässigen Transportband (132) einschließt.

12. Kultivatorsystem (102) nach einem der Ansprüche 10 oder 11, wobei die Streicheinheit (126) als schwimmendes Element (202) gebildet ist, umfassend mindestens einen Sammelarm (206), der gelenkig verbunden ist, wobei der mindestens eine Sammelarm (206) konfiguriert ist, um sich zu öffnen und den Teil der Wasserpflanzen (122) zu fangen, wenn die Streicheinheit (126) in der Transportrichtung (A) bewegt wird, und um sich zu schließen und den Teil der Wasserpflanzen (122) vorbeigleiten zu lassen, wenn die Streicheinheit (126) entgegen die Transportrichtung (A) bewegt wird.

## Revendications

1. Procédé de culture de plantes aquatiques (104) à la surface (107) d'une masse d'eau (106), le procédé comprenant les étapes consistant à :
- cultiver les plantes aquatiques (104) dans un bassin (108) contenant la masse d'eau (106) ;
- approvisionnement en eau riche en éléments nutritifs (114) la masse d'eau (106) à un premier emplacement (112) ;
- extraire l'eau purgée (118) de la masse d'eau (106) à un deuxième emplacement(113) situé à distance du premier emplacement (112) ;
- induire le déplacement d'une partie (122) de la plante aquatique vers une zone de collecte (124) à proximité du deuxième emplacement (113) ; et
- retirer la partie (122) de la plante aquatique de la zone de collecte (124),
**caractérisé en ce que** le déplacement est induit par le déplacement d'une unité de balayage (126) sur la surface (107) entre la zone de collecte (124) et un troisième emplacement (127) situé à proximité du premier emplacement (112).

2. Procédé selon la revendication 1, de sorte que les plantes aquatiques (104) sont des plantes aquatiques de surface, de préférence d'une espèce de lentilles d'eau.

3. Procédé selon la revendication 2, comprenant l'étape consistant à :
- équilibrer la culture et le retrait des plantes aquatiques (104) dans la masse d'eau (106), ce qui maintient la densité moyenne en surface des plantes aquatiques (104) dans une gamme de 0,5 à 1,5 kg m⁻².

4. Procédé selon l'une quelconque des revendications précédente, dans lequel l'eau riche en éléments nutritifs (114) comprend du fumier de vache fermenté et/ou du fumier de porc fermenté de sorte que le fumier de vache et/ou le fumier de porc est dilué avec de l'eau pour obtenir des densités d'environ 40 mg/l pour l'azote et jusqu'à environ 3 mg/l pour le phosphore.

5. Procédé selon la revendication 4, comprenant l'étape consistant à :
- transporter une partie de l'eau purgée (118) extraite au deuxième emplacement (113) au premier emplacement (112), et
- diluer le fumier non dilué avec la partie de l'eau purgée (118), pour former de l'eau riche en éléments nutritifs (114).

6. procédé selon l'une quelconque des revendications précédentes, comprenant l'étape consistant à :
- chauffer la masse d'eau (106) par apport d'énergie thermique provenant de la chaleur résiduelle produite par une installation de fermentation de fumier (136).

7. Procédé selon l'une quelconque des revendications précédentes, comprenant l'étape consistant :
- maintenir la température moyenne dans la masse d'eau (106) dans une gamme de 20°C à 30°C.

8. Procédé selon l'une quelconque des revendications précédentes, dans lequel l'étape de retrait de la partie de la plante aquatique (122) de la zone de collecte (124) comprend en outre au moins une étape de nettoyage, de séchage et de granulation de la partie (122) de la plante aquatique.

9. Procédé selon l'une quelconque des revendications précédentes, comprenant en outre l'étape consistant à commander par intermittence le fonctionnement de l'unité de balayage en réponse à un certain degré de croissance de la plante et/ou la densité de surface de la plante.

10. Système de culture (102) destiné à la culture de plantes aquatiques (104) dans une masse d'eau (106), le système de culture (102) comprenant :
- un bassin (108) contenant la masse d'eau (106) avec des plantes aquatiques (104) ;
- un dispositif d'approvisionnement en effluent (116) destiné à approvisionner en effluent riche en éléments nutritifs (114) la masse d'eau (106) à un premier emplacement (112) ;
- un dispositif d'extraction d'eau (120) destiné à extraire l'eau purgée (118) de la masse d'eau (106) à un second emplacement (113) situé à distance du premier emplacement (112) ;
- une unité de balayage de plantes (126) destinée balayer toute la surface de l'eau pour déplacer une partie (122) des plantes aquatiques vers une zone de collecte (124) ; et
- un mécanisme d'évacuation de plantes (130) destiné à retirer la partie (122) des plantes aquatiques de la zone de collecte (124),
**caractérisé en ce que** l'unité de balayage (126) peut s'étendre ou se déplacer entre la zone de collecte (124) et un troisième emplacement à proximité du premier emplacement (112) et **en ce que** la zone de collecte (124) est proche du deuxième emplacement (113).

11. Système de culture (102) selon la revendication 10, dans lequel le mécanisme d'évacuation de plantes comprend une bande transporteuse (132) perméable à l'eau destinée à transporter la partie (122) des plantes aquatiques de la zone de collecte (124), de préférence y compris un dispositif d'arrosage (138) destiné à nettoyer la partie (122) des plantes aquatiques au niveau la bande transporteuse (132) perméable à l'eau.

12. Système de culture (102) selon l'une quelconque des revendications 10 ou 11, dans lequel l'unité de balayage (126) est configuré en élément flotteur (202) comprenant au moins un bras collecteur (206) qui est relié de manière articulée, dans lequel l'au moins un bras collecteur (206) est configuré pour ouvrir et saisir la partie (122) des plantes aquatiques de surface lorsque l'unité de balayage (126) est déplacée dans la direction de transport (A), et pour fermer et laisser la partie (122) des plantes aquatiques de surface glisser lorsque l'unité de balayage (126) est déplacée à l'opposé du sens de transport (A).
